# EUROPEAN PATENT APPLICATION

(11) **EP 0 546 589 A1**
(43) Date of publication of application: **16.06.1993**
(21) Application number: 92202873.3
(22) Date of filing: 30.01.1987
(51) Int. Cl.: G02C 1/02

(54) **Lens holding means for glasses, particularly for rimless glasses**

(30) Priority: 30.01.1986 DK 449/86
(62) Divisional of application: 87901400.9
(71) Applicant: LINDBERG, Poul J., DK-8250 Ega (DK)
(72) Inventor: Lindberg,Poul-Jorn, DK-8250 Ega (DK); Dissing,Hans, DK-1414 Kobenhavn K (DK)
(74) Representative: Kyed, Iver

(57) **Abstract**

Lens holding means for rimless glasses. The lens holding means are made of a wire that is bent to form tension means that hold the lenses. The lenses have holes or recesses in which the lens holding means engage.

## Description

The present invention relates to eyeglasses, especially rimless eyeglasses, the lenses of which are fastened to the frames of the glasses by means of holding portions which are received in holes or recesses in the lenses. As examples of such an eyeglass type reference is made to the French patent specifications no. 62.079 and 1.087.904. By these and other corresponding known eyeglasses rimless or semi-rimless glasses may be secured withuot using an encircling rim. Hereby, however, both the lens mounting and the frame design are relatively complicated.

According to the invention a substantial simplification is obtained by the lenses being mounted on carrier member portions protruding straight forwardly from the frame and squeezed with a good holding effect in the holes or recesses. This conditions a simple frame construction, whereby the frame may even be constituted entirely by a wire material. The lenses are very easy to munt, and if the holder members are embodied with an increased length, so that they protrude in front of the front face of the lenses, they may even be used for holding additional glass members such as sun shades, when these are provided with the required holes or recesses. The user himself or herself may easily mount and demount the additional glasses.

By the invention it is furthermore realized that it is advantageous that the holes or recesses be embodied with an oblong shape for receiving holder members of a correspondinly oblong cross sectional shape, as the glasses may hereby, in a simple manner, be held in a non-rotatable manner relative the holder members. This embodiment is particularly appropriate for entirely rimless eyeglasses, where a good stability of the glasses will be obtained by the holder members being un- rotatable relative the lenses at the central bridge and the outer temple hinges, respectively. Another essential circumstance is that the oblong shape of the holes or recesses provides for the possibilty of the holder portions in a simple manner consisting of a folded together loop portion of a stiff wire material appropriate for the relevant purpose, whereby it is possible to construct the eyeglass frame exclusively from bent, stiff wire material with no use of solded or welded portions, which conditions a substantially simplified production process.

When the frame portions generally consist of wire material it is extremely appropriate that also the temple hinges and the associated temples of the eyeglasses are made of wire material, and according to the invention this is made possible by each of the temple hinges being constituted by a pintle wire portion and a surrounding screw coiled wire portion, which wire poritons continue in a temple and in a lens-carrying wire portion, respectively. Hereby the frame as a whole. i.e. including the temples and the hinges, may be embodied exclusively of a bent wire material, whereby the whole frame may be produced automatically at quite low costs.

The invention may well comprise semi-rimless glasses, in which the lens holding frame portions are mutually connected through frame portions, e.g. wire portions, which extend along either the upper or the lower rim of the lenses between the bridge and hinge areas. As each of the lenses is hereby connected to the frame at bothe sides there are no special requirements of the lenses being connected to the frame in a non-rotatable manner at the single areas of engagement with the frame, as the frame in itself will secure the glasses agaist relative rotation, and for the same reason it is thus not necessary that the holes or recesses in the leses be of an oblong shape, i.e. in these cases they may well have a circular shape, regardless of this not being visually and use-wise attractive compared to a narrow, oblong shape.

In the following the invention is described in more detail with reference to the drawing in which
Fig. 1 is a perspective exploded view of a pair of eyeglasses according to the invention,
Fig. 2 is a perspective view of an eyeglass hinge thereof,
Fig. 3 is a cross sectional view of a joint area thereof,
Fig. 4 is a front view of a pair of semi-rimless eyeglasses according to the invention, and
Fig. 5 is a corresponding view of another pair of semi-rimless eyeglasses according to the invention.

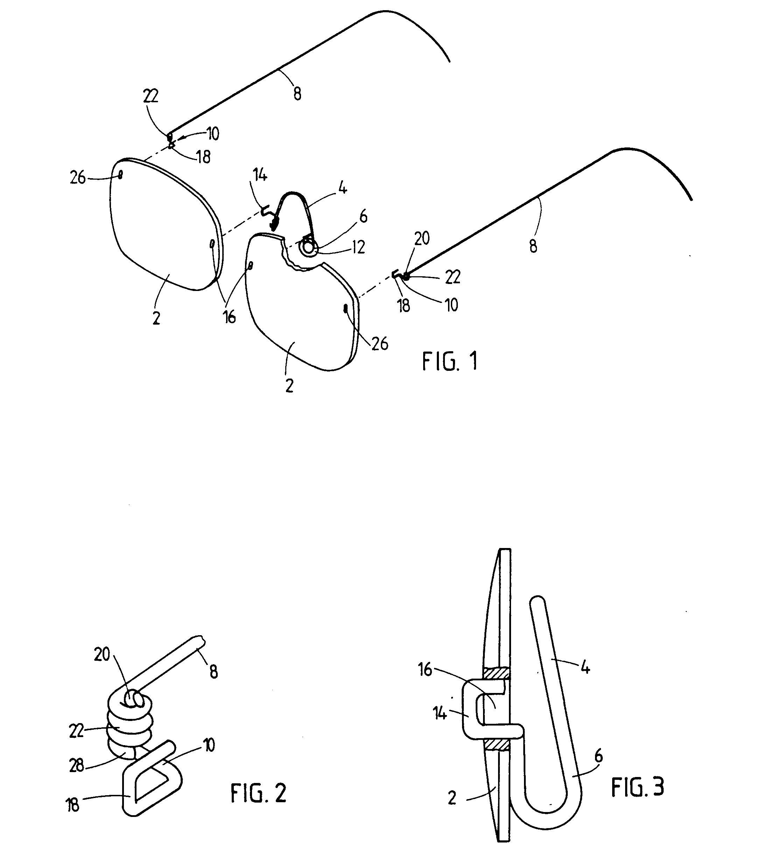

The pair of eyeglasses shown in Figs. 1-3 comprises two lenses 2, a bridge 4 with pad arms 6, and two temples 8, each having a hinge part 10 for mounting on the lenses,

The bridge is made of a rather stiff, but pro- nouncedly resilient dire material, preferably titanium wire, and is bent for forming the pad arms 6, which constitute downwardly projecting U-shaped loops, in which is inserted a holing base portion for a nose pad 12, which may consist of e.g. semi-soft plastic. From these loops the wire ends extend slightly laterally outwards and then forwards, upwards, and backwards through a forwardly projecting loop portion 14, in which the horizontal wire portions run parallelwise.

The loop portions 14 are designed for insertion into or through oblong holes 16 in the lenses 2, these holes being provided with great accuracy for achieving a good securing.

The hinge parts 10 are likewise made of wire and show corresponding loop portions, here designated 18, wherefrom the wire continues slightly outwards to the side and therefrom upwards for forming a hinge pintle 20.

About this wire is placed the foremost, screw coiled end portion 22 of the associated temple 24, which is also made of said wire material. After placing the screw coil on the pintle 20 the upper end therof is bent out for axial locking of the screw coil, whereafter this is only turnable about the pintle, preferably with a certain friction. The rear, bent ear portions of the temples may of course if desired be coated with an appropriate coating material.

The loop portion 18 is designed for insertion into or through oblong holes 26 in the lenses 2, corresponding to the holes 16.

From the parts shown in Fig. 1 the eyeglasses may thus be assembled solely by inserting the loop portions 14 ans 18 into the holes 16 and 26. Because of the oblong shape of the holes and the loop portions, no rotation may occur between the assembled parts.

The screw coil in each of the hinge parts 10 extends downwards from the front end of the temple 24 and ends in a lower end portion 28m see Fig.2, which, by outward rotation of the temple, will abut the wire portion extending laterally from the loop portion 18, such that the rotation stop which is normal for eyeglasses or temples is formed in a simple manner.

The loop portions 14 and 18 should extend all the way to the front face of the lenses 2 for optimizing the fastening, but as indicated in Fig. 3 they should preferably protrude somewhat in front of the front face of the lenses, whereby it may optionally apply that a resilient expansion effect of the outer ends of the loop portions may be ex- ploted for the fastening. However, another and more essential effect of the protruding loop portions will be that they will be able to fasten additional glasses in an easily releasable manner, when these glasses are provided with appropriate holes corresponding to the holes 16 and 26 in the lenses 2. These additional glasses may be extra lens glasses, e.g. half lenses for reading, or they may be sun shade glasses or other special glasses which may be mounted in an extremely discreet manner.

The user will even in a simple manner be able to make use of one and the same frame for different sets of lenses, though in practice this will hardly be decisive as the wire frame is quite cheap to produce.

It should be mentioned that the preferred wire material, i.e. titanium wire, has the quality that it can be given different colours by a tempering technique based on electric heating, whereby it is possible to obtain a surface colouring with several different colours along the tmeples, and such a coloring or multi-coloring of the temples will be comprised by the invention, as it is widely known that cosmetic factors in connection with eyeglasses may have a very great significance for production and sales.

In connection with the invention it is particularly appropriate that the frame and herein the protruding holder loops 14 and 18 may consist of bent wire material, but it is to be emphasized that for the obtention of the primary advantages it is no condition that the holder members should consist just of wire. These holding poritons may well be embodied of other materials, e.g. plastic, which may even be cast onto frame portions of the wire material. Regardless of whether the holder members of metal or plastic are to be used, it may, however, be an advantage that these bodies be shaped with a grooving which provides a resilient fastening of the portions in the oblong holes 16,26.

As far as the special hinges according to the invention are concerned, cf. Fig. 2, the rotation stop as established between an end portion of the screw coil 22 and a radial wire portion 10 of the other hinge part is indeed an operative stop which in practical use hinders the temple from being swung further than the swung-out position of use, but which, however, has a possibility for allowing the temple to be swung further outwards in case of pronounced over load, without the hinge being broken or the connected wire portions being durably deformed; the screw coil 22 may in itself be slightly resiliently compressible, such that at the overload the stop end 28 may pass above the blocking wire 10 without any breaking or durable deformation of the hinge parts. This is a great advantage compared to usual eyeglass hinges, which are normally durably damaged if overloaded.

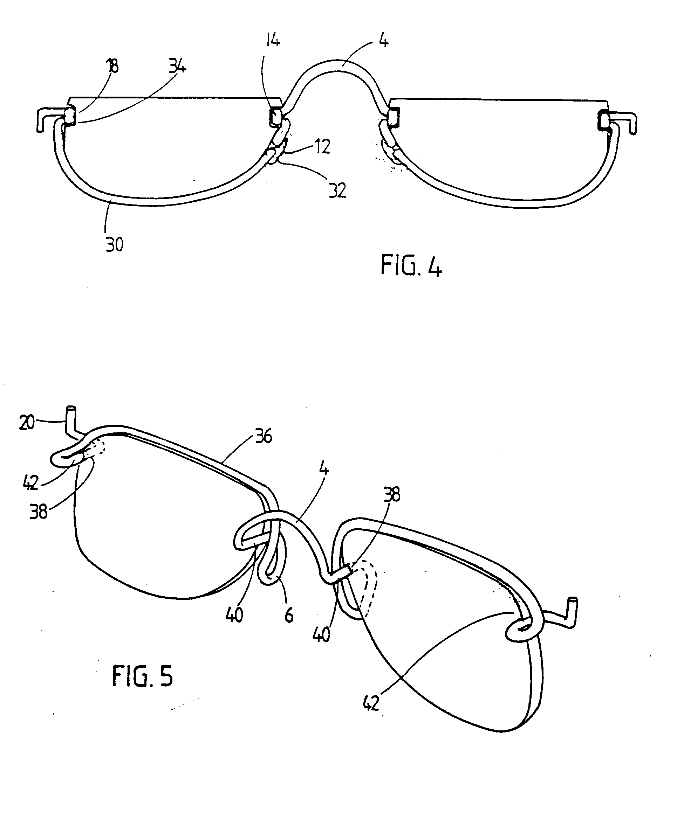

By the eyeglasses shown in Fig. 4 the rigid hinge parts are shaped just as in Fig. 2, but the wire loop 18 is continued in a wire 30 which extends downwards and inwards along the rim of the lens 2, to a rearwardly bent loop portion 32 for fastening the pad 12, and further on to connection to the loop portion 14 also indicated in Fig. 1, i.e. the wire continues in this loop portion and extends therefrom further upwards to and through the bridge 4, whereafter the wire extends in a symmetrical manner out along the other lens. Thus, a single through-going frame wire will be concerned, the free ends of which are located at the opposite outer hinge areas, and the hinges may hereby be shaped principally or even precisely as indicated in Fig. 2. The frame production as well as the mounting will be facilitated by the frame thus consisting of but a single wire member. The holder loops 14 and 18 are protruding as in Fig. 3, and they are shown received in edge recesses 34 in the lenses, being held in this engagement by means of a resilient tension in the frame.

When a through-going wire is used, as in Fig. 4, the holes or recesses 16,26,34 need not be of an oblong shape, as the frame wire in itself will secure a non-rotatable connection with the lenses. Hereby the holes 16 and 26 in Fig. 1 may thus be embodied with a circular shape.

In Fig. 5 is shown an example where a through-going frame wire 36 which extends along the upper edge of the lenses secures the lenses by means of single-wire portions, which are received in semi-circular recesses 38 in the lenses. Such wire portions, designated 40 and 42, extend forwards from the lenses and continue in the frame in the manner indicated , to the bridge 4 and the hinge parts, respectively.

The frames shown are entirely made from wire, but it will be appreciated that the projecting portions 14,18, 40,42, may well be provided in another manner, e.g. as cast portions of silicon rubber on a frame which may otherwise be of any suitable type and shape.

It should be noted that the disclosed special wire eyeglasses excel as eyeglass structures also in case of the said holder members not being protruding from the front face of the lenses, i.e. even if the possibility for additional glass holding hereby disappears.

## Claims

1. Eyeglasses, especially rimless eyeglasses, the lenses of which are secured to frame portions of the eyeglasses by means of holding portions which are received in holes or recesses in the lenses, characterized in that the lenses are mounted on holding pintle portions which project straight forwards from the frame, and which are squeezed with a good fastening effect in the holes or recesses.

2. Eyeglasses according to claim 1, characterized in that the holes or the recesses are of an oblong shape, and that the holding portions have a correspondingly oblong cross sectional shape.

3. Eyeglasses according to claim 2, characterized in that the glasses are entirely rimless, the lenses being secured only by the said holding portions at each side of the glasses, where the holding portions are connected to a cebtral bridge and a hinge part for a temple, respectively.

4. Eyeglasses according to claim 2 or 3, characterized in that the holding portions are constituted by loop bent wire poritons.

5. Eyeglasses according to claim 4, characterized in that the bent wire portions are continued in a wire bridge with loop bent holder members for pad portions and respective outer hinge parts consisting of same wire material, respectively.

6. Eyeglasses according to claim 5, characterized in that each of the temple hinges comprise a pintle wire portion and a surrounding screw coil wire portion, which wire portions continue in a temple and the lens carrying wire portion, respectively.

7. Eyeglasses according to claim 6, characterized in that a rotation stop at the hinges is established by a free wire end at one end of the screw coil by the rotation of the temple abutting a radially bent-out portion of the pintle wire.

8. Eyeglasses accorcing to claim 4, characterized in that the holding portions are provided as partial lengths of a through-going wire, which, between the holding portions for the single lenses , extends along the upper or lower rim of the lenses.

9. Eyeglasses according to claim 8, characterized in that the holding portions are inserted into semi-circular recesses in the edge of the lenses.

10. Eyeglasses according to claim 1, characterized in that the holding portions project so much forwardly from the front face of the lens that they may hold additional glasses such as sunshade glasses provided with corresponding holes or recesses.
